# EUROPEAN PATENT APPLICATION

(11) **EP 3 818 836 A1**
(43) Date of publication of application: **12.05.2021**
(21) Application number: 19208031.5
(22) Date of filing: 08.11.2019
(51) Int. Cl.: A23L 2/66, A23L 2/46, A23C 11/10

(54) **A METHOD FOR PRODUCING PLANT MILK**

(71) Applicant: Tetra Laval Holdings & Finance S.A., 1009 Pully (CH)
(72) Inventor: Dholakia, Hemang, 629414 Singapore (SG); Cheong, YuanHoe, 642663 Singapore (SG); Jun Teck, Lee, 640458 Singapore (SG)
(74) Representative: Tetra Pak - Patent Attorneys SE

(57) **Abstract**

The present invention relates to a method (200) for producing plant milk (PM), the method comprising the steps of grinding (220) legumes (L) with water (W) to form a slurry (S), cooking (230) the slurry (S) to reduce anti-nutritional factors, originating from the legumes, mixing (240) the cooked slurry (S) with a first enzyme (E1) to form a mixture (M), the first enzyme (E1) hydrolyzing starch originating from the legumes (L) by breaking up the starch in the mixture (M) into simpler carbohydrates, deactivating (250) the first enzyme (E1) by altering a temperature of the mixture (M) that is obtained subsequent to the step of mixing (240), separating (260) insoluble components originating from the legumes (L) to obtain an insoluble component fraction (F) and a plant milk base (MB), and heating (280) the plant milk base (MB) to reduce microorganisms in the plant milk base (MB), such that the plant milk base (MB) thereby forms the plant milk (PM).

## Description

### Technical Field

The inventive concept relates to a method for producing plant milk.

### Background Art

Plant-based beverages known as plant milks have become popular over the last years. The plant milk is vegan, healthy, and environmental-friendly. Several plant milks have already been produced such as soy milk and rice milk. It is nevertheless desired to produce plant milks from alternative sources, both to provide consumer greater choice as well as to have a varied nutritional profile. Processes available today have proved to be troublesome and involve high costs.

### Summary

It is an object of the inventive concept to at least partly overcome one or more of the above-identified limitations of the prior art. In particular, it is an object to provide a method for producing plant milk using alternative sources. Another object is to be able to produce plant milk from alternative sources while using similar infrastructure as for producing currently available plant milks such as soy milk.

According to an aspect of the present inventive concept there is provided a method for producing plant milk, the method comprising the steps of grinding legumes with water to form a slurry, cooking the slurry to further reduce anti-nutritional factors, originating from the legumes, mixing the cooked slurry with a first enzyme to form a mixture, the first enzyme hydrolyzing starch originating from the legumes by breaking up the starch in the mixture into simpler carbohydrates, deactivating the first enzyme by altering a temperature of the mixture that is obtained subsequent to the step of mixing, separating insoluble components originating from the legumes to obtain an insoluble component fraction and a plant milk base, and heating the plant milk base to reduce microorganisms in the plant milk base, such that the plant milk base thereby forms the plant milk.

The step of grinding the legumes with water to form the slurry results in a size reduction of the legumes particles in the slurry. Examples of advantages brought by the step of grinding are that it facilitates starch hydrolysis in the subsequent step of mixing. It also improves a mouth feel of the slurry which in the subsequent steps is used as a base for the plant milk formation. The step of grinding may be performed with a legumes to water ratio in a range of 1:3 to 1:7. The step of grinding may be performed at a temperature within the range of 30 to 90°C.

The step of cooking the slurry reduces anti-nutritional factors of the slurry obtained subsequent to the step of grinding. Thereby the step of cooking improves digestion of the plant milk later on obtained from the slurry. The step of cooking further facilitates enzyme hydrolysis in the subsequent step of mixing.

The step of mixing the cooked slurry with the first enzyme allows hydrolysis of starch into simpler carbohydrates e.g. dextrins. An example of advantages brought by the step of mixing is that a viscosity of the cooked slurry is reduced subsequent to the step of mixing. In addition, the step of mixing improves a mouth feel and provides a naturally sweet taste without adding any sugar to the cooked slurry which is used as a base for the plant milk formulation. The step of mixing the cooked slurry with the first enzyme may be controlled to avoid e.g. formation of a too sweet plant milk. This may be achieved by controlling a time and a temperature of the mixing. In other words, the time of and the temperature at which the first enzyme allows hydrolysis of starch into simpler carbohydrates may be controlled.

The step of deactivating allows deactivation of the first enzyme subsequent to the step of mixing. The step of deactivating may be performed when the mixture has reached a desired sweetness and mouthfeel. The step of deactivating allows to obtain a consistent plant milk quality e.g. the same sweetness and mouthfeel.

The step of separating insoluble components originating from the legumes allows for separating insoluble components in the form of an insoluble component fraction. Thereby the step of separating allows for maintaining soluble fibers in the plant milk base which are healthy. Examples of such insoluble components are legumes shell or hull or skin or denatured proteins. The step of separating further improves the mouthfeel of the plant milk obtained from the plant milk base e.g. it allows for a smoother mouthfeel. The step of separating may be performed by filtration or centrifugal separation.

The step of heating the plant milk base allows for deactivating the enzymes remained in the plant milk base and also reducing microorganisms in the plant milk base. Thereby the step of heating the plant milk base allows for forming the plant milk. Some examples of the heating are ultra-high temperature (UHT) treatment and pasteurization processes.

By "plant milk" is hereby meant a nondairy beverage made from a plant or plants. Examples of plant milk are soy milk and pea milk.

By "starch originating from the legumes" is hereby meant a polymeric carbohydrate consisting of many glucose units joined by glycosidic bonds. The starch may be found in plant material such as grains and seeds. The starch is an important source of energy.

By "simpler carbohydrates" is hereby meant a group of low-molecular weight carbohydrates produced by the hydrolysis of starch originating from the plant material.

By "enzyme" is hereby meant macromolecular biological catalysts that accelerate chemical reactions such as hydrolysis of the starch originating from the plant material. Examples of the enzymes are α-amylase, β-amylase, and amyloglucosidase.

By "anti-nutritional factor" is hereby meant a portion of the plant material that cannot be completely broken down by human digestive enzymes such as "insoluble fibers".

The legumes may be peas such as yellow peas and chickpeas. The yellow peas and chickpeas are nutrient-dense food as they provide important nutrients such as protein, fiber and certain dietary minerals.

The first enzyme may be α-amylase and/or β-amylase. Thereby, the α-amylase and/or β-amylase may hydrolyze starch originating from the legumes by breaking up the starch into simpler carbohydrates such as dextrins. The first enzyme may be any other enzyme that hydrolyzes (1,4)-alpha-D-glucosidic linkages in starch polysaccharides.

The step of mixing may further comprise mixing the cooked slurry and the first enzyme with a second enzyme, the second enzyme hydrolyzing the simpler carbohydrates in the mixture into simple sugars. Thereby, the step of mixing the cooked slurry and the first enzyme with the second enzyme may allow hydrolysis of simpler carbohydrates, originating from hydrolysis of the starch by the first enzyme, into the simple sugars. In addition, the mixing of the second enzyme may facilitate reducing the viscosity of the cooked slurry and providing the naturally sweet taste without adding any sugar to cooked slurry which is used as a base for the plant milk formation. The step of mixing the cooked slurry with the first enzyme and the second enzyme may be performed in a single step i.e. using the same mixer or tank. In the case of the single step, the first enzyme and the second enzyme may work in sequence- first enzyme breaking down the starch into dextrins and then the second enzyme breaking those dextrins down to simpler sugars. The step of mixing the cooked slurry with the first enzyme and the second enzyme may be performed in two separate steps. In the case of two separate steps, the cooked slurry may first be mixed with the first enzyme e.g. in a first mixer or a first tank. The obtained mixture may next be mixed with the second enzyme e.g. in a second mixer or a second tank. In the case of having the second enzyme, the second enzyme is also subjected to the steps of deactivating, separating and heating, as described above for the first enzyme.

By "simple sugars" is hereby meant simple carbohydrates obtained from hydrolysis of simpler carbohydrates e.g. dextrins. Examples of sugars obtained from hydrolysis of simpler carbohydrates are maltodextrin, maltose, dextrose / glucose.

The second enzyme may be amyloglucosidase and/or glucoamylase. Thereby, the amyloglucosidase may hydrolyze the simpler carbohydrates in the mixture by breaking up the simpler carbohydrates into simple sugars. The simple sugars may in addition to the simpler carbohydrates define the sweetness of the plant milk. The second enzyme may be any other enzyme that hydrolyzes (1,4)- and (1,6)-alpha-D-glucosidic linkages at the non-reducing ends of polysaccharides.

The method may further comprise adding at least one of salt, vegetable oil, calcium, vitamins, a stabilizer and a flavor to the plant milk base, prior to the step of heating. This may in turn improve a taste of the plant milk and also convert the plant milk to a beverage ready for consumption. In addition, various types of the plant milk i.e. plant milk with various tastes and/or various nutritious content may be formed. Examples of the salt and the vegetable oils are table salt, calcium salt, sunflower oil, rapeseed oil or other oil of vegetable / plant origin.

The step of separating may be performed subsequent to the step of deactivating. This may in turn allow denatured proteins which are formed during the step of deactivating to be subjected to the step of separating. Thereby those formed denatured proteins may also be separated in the step of separating. This may in turn prevent or at least decrease the presence of rough textures in the plant milk so as to improve a mouth feel of the plant milk.

The step of grinding may comprise a coarse grinding step followed by a fine grinding step. Thereby a better size reduction and size control may be achieved for instance particles of the slurry may have smaller sizes than a single grinding step and at the same time the sizes of the particles may be better controlled. The coarse grinding step followed by the fine grinding step may also increase a life time of the grinding equipment.

The step of deactivating may be performed by heating and/or cooling of the mixture. For instance, the mixture may be only heated to a certain temperature for a certain period of time; or the mixture may be only cooled to a certain temperature for a certain period of time. Alternatively, the mixture may be heated to a first temperature for a certain period of time. The mixture may then be cooled to a second temperature wherein the second temperature may be lower than the first temperature. An example of advantages by the heating and cooling is that the heating and cooling allow for a more flexible method of producing the plant milk. This may in turn decrease a time and hence a cost of producing the plant milk by e.g. avoiding extra heating. The other advantage is that the part or all of the cooling could be done by removing the vapors under vacuum, thus effectively deodorizing the product.

The method may further comprise, prior to the step of grinding, soaking the legumes in a liquid to further reduce anti-nutritional factors in the legumes. Thereby, a taste of the plant milk and digestion of the plant milk may be improved. The step of soaking may also make the legumes softer and hence facilitate the step of grinding. The liquid may be water. The liquid may be a water-based liquid such as water mixed with sodium bicarbonate. The sodium bicarbonate may increase a PH of the water-based liquid and thereby facilitate reduction of the anti-nutritional factors in the legumes.

The step of soaking may be performed at a temperature within the range of 30 to 60 °C, in particular at a temperature within the range of 25 to 40 °C. These temperature ranges may facilitate softening of the legumes and also reduction of the anti-nutritional factors in the legumes.

The step of cooking may be performed at a temperature within the range of 75 to 95 °C, in particular at a temperature within the range of 85 to 95°C. These temperature ranges may facilitate the reduction of the anti-nutritional factors in the slurry during the step of cooking. In addition, these temperature ranges may prevent extra heating of the slurry at higher temperatures (above 95 °C) and thereby reduce a cost of producing the plant milk.

The step of mixing may performed at a temperature within a range of 40 to 95 °C, in particular at a temperature within the range of 65 to 95°C. These temperature ranges may facilitate hydrolysis of starch originating from the legumes by breaking up the starch in the mixture into simpler carbohydrates. These temperature ranges may also facilitate hydrolysis of the simpler carbohydrates into simple sugars. Theses temperature ranges may in turn define the taste e.g. sweetness and also facilitate the mouth feel e.g. improve a creamy and a smooth mouth feel of the plant milk.

The step of cooking may be performed for a period of time within the range of 10 to 120 min, in particular the range of 10 to 30 min. These time ranges may prevent extra heating of the slurry for longer times and thereby reduce both the time and cost of producing the plant milk. The time of the cooking may be adjusted according to the step of heating, as the slurry, in the form of the plant milk base, is again subjected to the heat in the step of heating.

The step of deactivating may be performed at a temperature within a range of 80 to 130°C for a period of a time within a range of 30 to 240 s. The step of deactivating by heating the mixture may be followed by a rapid cooling i.e. flash cooling of the mixture, subsequent to the step of heating. For instance, the flash cooling (can be called also as flash evaporation) may be performed by lowering the temperature to a range of 50 to 90 °C. This may be performed under vacuum (can be called also as vacuum cooling or vacuum evaporative cooling). The flash cooling may prepare the mixture for the step of separating to be performed subsequent to the step of deactivating. In other words, the flash cooling may decrease the temperature of the mixture and hence prepare the mixture for the subsequent step of separating. It also does a partial deodorization of the slurry, if the vacuum cooling is used. Thus, a less green / astringent / grassy note may be achieved.

The step of deactivating may alternatively be performed at a temperature within a range of 2 to 18°C, in particular a range of 4 to 8°C. The step of deactivating by cooling may be performed at a temperature within a range of 2 to 18°C, in particular a range of 4 to 8°C. The step of deactivating by cooling the mixture may be an alternative to the step of deactivating by heating.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1 is an schematic illustration of a system 100 for producing plant milk.
Fig. 2 is a block scheme of a method 200 for producing plant milk.

### Detailed Description

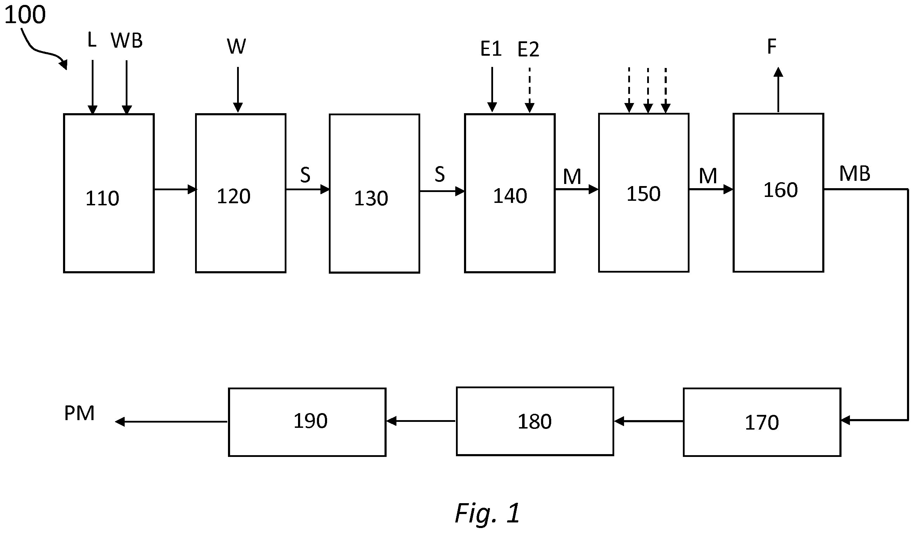

With reference to Fig. 1 a system 100 is illustrated. The system 100 may be used to produce plant milks PM from various legumes L. In the following the plant milk PM, the legumes L and the system 100 in relation to producing plant milk PM will be described.

The plant milk PM is a vegan beverage made from legumes L. The plant milk PM may have a creamy mouthfeel. The plant milk PM may have various tastes and flavors.

The legumes L (or pulses, in other terms, especially when the legumes are mature and/or dry condition) are fruits or seeds of agriculturally grown leguminous plants. They are the nutritionally-dense edible seeds of plants from legume family, including dry peas, beans (butter beans, navy beans, cannellini beans, red kidney beans, adzuki beans, black eyed beans, soya beans), lentils and chickpeas. Legumes include all forms of beans and peas from the Fabaceae (or Leguminosae) botanical family. Examples of legumes L are alfalfa, clover, beans (butter beans, navy beans, cannellini beans, red kidney beans, adzuki beans, black eyed beans, soya beans), yellow peas, chickpeas, lentils, lupins, mesquite, carob, soybeans, peanuts, and tamarind. The legumes L are important sources of energy. The legumes L comprise important nutrients such as protein, dietary fiber, carbohydrates, and dietary minerals. The legumes L may be fresh or dried. The legumes L may be supplied in large bags.

In connection with Fig. 1, a system 100 is illustrated. The system 100 may comprise a soaking unit 110. The soaking unit 110 may e.g. be a tank. A volume of the soaking unit may be in a range of 600 to 1500 liter. The legumes L and a liquid WB may be provided to the soaking unit 110. Fig. 1 shows that the soaking unit 110 comprises two inlets: one for legumes L and one for liquid WB. The soaking unit 110 may for instance comprise a bag emptying system. The bag emptying system may deliver and empty bags containing the legumes L into the soaking unit 110. The liquid WB may be water. The legumes L to water ratio provided to the soaking unit 110 may be in a range of 1:2 to 1:5. A ratio of 1:3 has been shown to produce a good quality product. The liquid WB may be a water-based liquid such as water mixed with sodium bicarbonate. The sodium bicarbonate may be added to water at a ratio of 0.1-2%. Sodium bicarbonate concentration of 1% v/v in the water has been shown to yield a good quality product. The legumes L to water-based liquid ratio provided to the soaking unit 110 may be in a range of 1:2 to 1:5.The soaking unit 110 may be equipped with a heater. The heater may provide heat to the soaking unit 110. The soaking 210 of the legumes L in the liquid WB may be performed at a temperature within the range of 25 to 60 °C. The soaking 210 of the legumes L in the liquid WB may be performed at a temperature within the range of 30 to 40 °C. The soaking 210, at a temperature of about 30 C, has been shown to provide good quality product. The soaking 210 of the legumes L in the liquid WB may be performed for a period of a time within a range of 3 to 12 hours. A soaking period of 12 hours is found to work well. The soaking 210 of the legumes L in the liquid WB may reduce anti-nutritional factors in the legumes L. The system 100 may further comprise a drainer arranged downstream the soaking unit 110. The drainer may drain the liquid WB and hence separate the soaked legumes L.

Still in connection with Fig.1, the system comprises a grinder 120. The grinder 120 may be arranged downstream the drainer. The grinder 120 may be a conventional grinder 120. The conventional grinder 120 may be of a perforated disc mill type and commercially available. The grinder 120 may receive the soaked legumes L. Fig. 1 shows that the grinder 120 comprises a water W inlet for providing water W into the grinder 120. The grinder 120 grinds the legumes L with water to form a slurry S. The legumes L to water W ratio may be in a range of 1:3 to 1:7. The grinder 120 may be equipped with a heater. The heater may provide heat to the grinder 120. The grinding 220 of the legumes L and water W may be performed at a temperature range of 30 to 90°C. The grinder 120 may further comprise a coarse grinder and a fine grinder. The coarse grinder may first grind the legumes with water W to reduce the average particle size to about 1000 micron. The coarse-grinded legumes L may next be provided to the fine grinder. The fine grinder may next grind the coarse-grinded legumes L to reduce the particle size to average of about 200-300 micron. The grinder 120 may grind the legumes L until legumes L with a particle size in a range of 200-300 micron is achieved.

Still in connection with Fig. 1, the system further comprises a cooker 130. Fig. 1 shows that the cooker 130 is arranged downstream the grinder 120. The cooker 130 may be a conventional cooker 130. The conventional cooker 130 may be commercially available. The cooker 130 may receive the slurry S from the grinder 120. The cooker 130 cooks the slurry S to reduce anti-nutritional factors originating from the legumes. The cooking 230 may be performed at a temperature within the range of 75 to 95 °C. The cooking 230 may be performed at a temperature within the range of 85 to 95°C. The cooking 230 may be performed for a period of time within the range of 10 to 120 min. The cooking 230 may be performed for a period of time within the range of 10 to 60 min. The cooked slurry S may be cooled down, subsequent to the cooking 230. For instance, the cooked slurry S may be cooled to a temperature within the range of 40 to 65°C.

Still in connection with Fig. 1, the system 100 further comprises a mixer 140. Fig. 1 shows that the mixer 140 is arranged downstream the cooker 130. Fig. 1 shows that the cooked slurry S is fed from the cooker 130 into the mixer 140. Fig. 1 further shows that the mixer 140 comprises an inlet for providing a first enzyme E1 into the mixer 140. The mixer 140 mixes the cooked slurry S with the first enzyme E1. The mixer 140 forms a mixture M. The mixture M may still be in the form of a slurry S. The first enzyme E1 may be α-amylase and/or β-amylase. The first enzyme E1 hydrolyzes starch originating from the legumes L. The first enzyme E1 breaks up the starch in the mixture M into simpler carbohydrates such as dextrins. The mixer 140 may also mix the cooked slurry S and the first enzyme E1 with the second enzyme E2. Fig. 1 shows that the depicted mixer 140 comprises another inlet for providing the second enzyme E2 into the mixer 140. In other words, mixing 240 of the cooked slurry S, the first enzyme E1 and the second enzyme E2 may be performed in the same mixer 140. Alternatively, mixing 240 of the cooked slurry S, the first enzyme E1 and the second enzyme E2 may be performed in two different mixers. In this case, a first mixer may mix the cooked slurry S with the first enzyme E1 to form the mixture M. The mixture M may then flow into a second mixer. The second mixer may mix the mixture M with the second enzyme E2. The second enzyme E2 may hydrolyze the simpler carbohydrates in the mixture M into simple sugars. The second enzyme E2 may be amyloglucosidase and/or glucoamylase. The mixing 240 may be performed at a temperature within a range of 40 to 95 °C. The mixing 240 may be performed at a temperature within the range of 65 to 95°C. The mixing 240 may be performed for a period of a time within a range of 10 to 120 min. The mixer 140 may have a volume in a range of 500 to 2000 liter. The mixer 140 may be a conventional mixer. The conventional mixer 140 may be commercially available.

Still in connection with Fig. 1, the system further comprise deactivator 150. Fig.1 shows that the deactivator 150 is arranged downstream the mixer 140. The deactivator 150 may be a heater and/or a cooler. The deactivator 150 may be a conventional heater and/or cooler. The conventional deactivator 150 may be commercially available. The deactivator 150 deactivates the first enzyme E1 by altering a temperature of the mixture M that is obtained subsequent to the mixing. The altering of the temperature of the mixture M is shown by dashed arrows in Fig. 1. The deactivator 150 may further deactivate the second enzyme E2, if present. The deactivation of the second enzyme E2 may be performed by the same altering of the temperature of the mixture M. The deactivating 250 of the first enzyme E1 and the second enzyme E2 may be performed by heating or cooling of the mixture M. In the case of deactivating 250 by heating, the deactivating 250 may be performed at a temperature within a range of 80 to 130°C. The deactivating 250 by heating may be performed for a period of a time within a range of 30 to 240 s. The deactivating 250 by heating may be followed by a flash cooling. The flash cooling may be performed at a temperature within a range of 50 to 90°C. The deactivating by heating may be performed at a temperature within a range of 90-120 °C for a period of 70-90 s, followed by flash cooling within range of 60-80 C. In the case of deactivating by cooling, the deactivating may be performed at a temperature within a range of 2 to 18°C. The deactivating by cooling may be performed at a temperature within a range of 4 to 8°C.

Still in connection with Fig. 1, the system 100 further comprises a separator 160. Fig. 1 shows that the separator 160 is arranged downstream the deactivator 150. The separator 160 separates insoluble components originating from the legumes L from the mixture M to obtain an insoluble component fraction F and a plant milk base MB. A temperature of the separator 160 may be in a range of 10 to 80°C. The separating 260 of the insoluble components from the mixture M may be performed in a manner which per se is known in the art. The separating 260 of the insoluble components from the mixture M may be performed by filtration or centrifugal separation. For instance, the separating 260 of the of the insoluble components from the mixture M may be performed by means of a decanter. The decanter may separate insoluble components from the mixture M by using a high-speed centrifugal force. The insoluble component fraction F may look like a viscous liquid. The insoluble component fraction F may comprise about 10-20% by wet weight of the mixture M. The insoluble components in the insoluble component fraction may have an average size of at least 0.5 mm. Fig. 1 shows that the separator 160 comprises a insoluble component fraction outlet F that diverts insoluble component fraction F. The insoluble component fraction outlet F may comprise a pump for pumping the insoluble component fraction F. The plant milk base MB may be in the form of liquid. The plant milk base MB may comprise less than 5-10 wt% of the insoluble fibers. Fig.1 also shows that the separator 160 comprises and a plant milk base outlet MB that directs plant milk base MB to a mixer 170. At least one of salt, vegetable oil, calcium, vitamins, a stabilizer and a flavor may be added to the plant milk base MB. At least one of salt, vegetable oil, calcium, vitamins, a stabilizer and a flavor may be added to plant milk PM, prior to the heating 280 of the plant milk base MB. Some examples of flavors are vanilla, chocolate, strawberry, raspberry, dairy flavor, coffee, mocha etc.

Still in connection with Fig. 1, the system 100 further comprises a heater 180. The heater 180 heats the plant milk base MB to reduce microorganisms in the plant milk base MB. The plant milk base MB, subsequent to the heating by the heater 180, forms a plant milk PM. The heater 180 may provide UHT treatment or pasteurization. For instance, the heater 180 may perform the UHT treatment using a direct or an indirect heating. In the case of the direct UHT heating, the heater 180 may inject steam into the plant milk base MB. In the case of the indirect UHT heating, the heater 180 may heat the plant milk base MB in an indirect manner. In other words, in the case of the indirect UHT heating, the plant milk base MB may not come into direct contact with the heat source but may instead be heated by a heat exchanger. In this case, the heat exchanger may e.g. be a plate type heat exchanger. The heater 180 may heat the plant milk base MB to a temperature within a range of 75 to 150°C. The heating 280 may be performed for a period of time within the range of 2 to 20 s. The plant milk M may be cooled to a temperature within the range of 4 to 40 °C, subsequent to the heating 280.

The system 100 may further comprise a homogenizer 190. The homogenizer may be arranged downstream to the heater 180. The homogenizer 190 may reduce size of solid particles in the plant milk PM. The homogenizer may improve the homogeneity and quality of the plant milk PM. Homogenizer 190 may also improve the stability of the plant milk PM.

The system 100 may further comprise a packaging unit 200 arranged downstream the homogenizer 200. The packaging unit 200 may provide aseptic packages. In this case, the plant milk PM may be shelf stable for over 6 months. The packaging unit 200 may not provide aseptic packages. In this case, the plant milk PM may be kept refrigerated.

For clarity purposes, Fig.1 shows that the system 100 comprises various units each performing a step of the method 200, according to the present inventive concept. For instance, the system 100 comprises the cooker 130, the mixer 140, the deactivator 150, and the separator 160. However, the system 100 may be configured in other ways. For instance, the system 100 may comprise a unit that performs the steps of cooking 230, mixing 240, deactivating 250, and separating 260. Therefore, the present inventive concept is not limited to the particular units of the system 100 shown in Fig. 1.

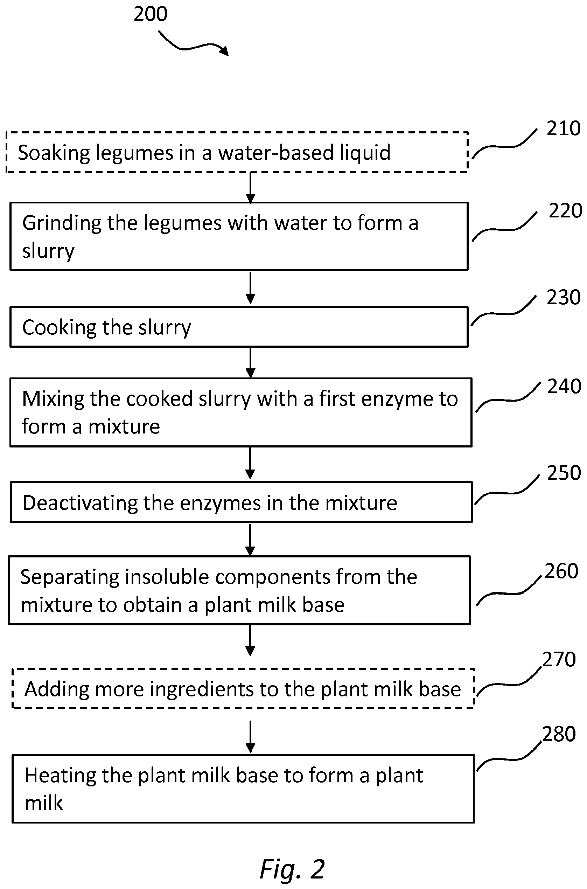

In connection with Fig. 2, a block scheme of a method 200 for producing plant milk PM is illustrated.

The method 200 may comprise soaking 210 legumes L in a liquid WB to reduce anti-nutritional factors in the legumes L. The step of soaking 210 may be performed using a soaking unit 110, as described above. The step of soaking 210 may be performed, as described above.

The method 200 comprises grinding 220 the legumes L with water W to form a slurry S. The grinding 220 of the legumes L may be performed using a grinder 120, as described above. The step of grinding 220 may comprise a coarse grinding step followed by a fine grinding step. The step of grinding 220 of the legumes L is performed as described above. The method 200 further comprises cooking 230 the slurry S to reduce anti-nutritional factors, originating from the legumes L. The step of cooking 230 the slurry may be performed using a cooker 130, as described above. The step of cooking 230 the slurry is performed as described above. The method 200 further comprises mixing 240 the cooked slurry S with a first enzyme E1 to form a mixture M, the first enzyme E1 hydrolyzing starch originating from the legumes L by breaking up the starch in the mixture M into simpler carbohydrates. The step of mixing 240 the cooked slurry S with the first enzyme E1 may be performed using a mixer 140, as described above. The step of mixing 240 the cooked slurry S with the first enzyme E1 is performed as described above. The step of mixing 240 may further comprise mixing a second enzyme E2, the second enzyme E2 hydrolyzing the simpler carbohydrates in the mixture M into simple sugars. The step of mixing 240 the second enzyme E2 may be performed using the same mixer 140, as described above. The step of mixing 240 the second enzyme E2 may be performed using a different mixer 140, as described above. The step of mixing 240 the second enzyme E2 may be performed as described above.

The method 200 further comprises deactivating 250 the first enzyme E1 by altering a temperature of the mixture M that is obtained subsequent to the step of mixing 240. The method 200 may further comprises deactivating 250 the second enzyme E2 by altering a temperature of the mixture M that is obtained subsequent to the step of mixing 240. The step of deactivating 250 may be performed by heating or cooling of the mixture M. The step of deactivating 250 may be performed using a deactivator 150, as described above. The step of deactivating 250 is performed as described above. The method 200 further comprises separating 260 insoluble components originating from the legumes L to obtain an insoluble component fraction F and a plant milk base MB. The step of separating 260 may be performed using a separator 160, as described above. The step of separating 260 is performed as described above. The method 200 further comprises heating 280 the plant milk base MB to reduce microorganisms in the plant milk base MB, such that the plant milk base MB thereby forms the plant milk PM. The step of heating 280 may be performed using a heater 170, as described above. The step of heating 280 is performed as described above.

The method 200 may further comprise a step of mixing 270 of plant milk base with at least one of salt, vegetable oil, calcium, vitamins, a stabilizer and a flavor, prior to the step of heating 280. The step of mixing 270 at least one of salt, vegetable oil, calcium, vitamins, a stabilizer and a flavor to the plant milk base MB may be performed, as described above.

The step of soaking 210 the legumes L in the liquid WB is performed prior to the step of grinding 220. The step of separating 260 is performed subsequent to the step of deactivating 250. Other steps of the method may be performed in any order suitable.

From the description above follows that, although various embodiments of the invention have been described and shown, the invention is not restricted thereto, but may also be embodied in other ways within the scope of the subject-matter defined in the following claims.

## Claims

1. A method (200) for producing plant milk (PM), the method (200) comprising the steps of:
grinding (220) legumes (L) with water (W) to form a slurry (S),
cooking (230) the slurry (S) to reduce anti-nutritional factors, originating from the legumes (L),
mixing (240) the cooked slurry (S) with a first enzyme (E1) to form a mixture (M), the first enzyme (E1) hydrolyzing starch originating from the legumes (L) by breaking up the starch in the mixture (M) into simpler carbohydrates,
deactivating (250) the first enzyme (E1) by altering a temperature of the mixture (M) that is obtained subsequent to the step of mixing (240),
separating (260) insoluble components originating from the legumes (L) to obtain an insoluble component fraction (F) and a plant milk base (MB), and
heating (280) the plant milk base (MB) to reduce / eliminate microorganisms in the plant milk base (MB), such that the plant milk base (MB) thereby forms the plant milk (PM).

2. The method (200) according to claim 1, wherein the legumes (L) are peas.

3. The method (200) according to claim 1 or 2, wherein the first enzyme (E1) is α-amylase and/or β-amylase.

4. The method (200) according to any one the preceding claims, wherein the step of mixing (240) further comprises mixing the cooked slurry (S) and the first enzyme (E1) with a second enzyme (E2), the second enzyme (E2) hydrolyzing the simpler carbohydrates in the mixture (M) into simple sugars.

5. The method (200) according to claim 4, wherein the second enzyme (E2) is amyloglucosidase and/or glucoamylase.

6. The method (200) according to any of the preceding claims, the method (200) further comprising adding (270) at least one of salt, vegetable oil, calcium, vitamins, a stabilizer and a flavor to the plant milk base (MB), prior to the step of heating (280).

7. The method (200) according to any of the preceding claims, wherein the step of separating (260) is performed subsequent to the step of deactivating (250).

8. The method (200) according to any of the preceding claims, wherein the step of grinding (220) comprises a coarse grinding step followed by a fine grinding step.

9. The method (200) according to any of the preceding claims, wherein the step of deactivating (250) is performed by heating or cooling of the mixture (M).

10. The method (200) according to any one the preceding claims, further comprising prior to the step of grinding (220), soaking (210) the legumes (L) in a liquid (WB) to further reduce anti-nutritional factors in the legumes (L).

11. The method (200) according to any of claim 10, wherein step of soaking (210) is performed at a temperature within the range of 25 to 60 °C, in particular at a temperature within the range of 30 to 40 °C.

12. The method (200) according to any of the preceding claims, wherein step of cooking (230) is performed at a temperature within the range of 75 to 95 °C, in particular at a temperature within the range of 85 to 95°C.

13. The method (200) according to any of the preceding claims, wherein step of mixing (240) is performed at a temperature within a range of 40 to 95 °C, in particular at a temperature within the range of 65 to 95°C.

14. The method (200) according to any of the preceding claims, wherein step of cooking (230) is performed for a period of time within the range of 10 to 120 min, in particular the range of 10 to 60 min.

15. The method (200) according to any one of claims 9-14, wherein the step of deactivating (250) is performed at a temperature within a range of 80 to 130°C for a period of time within a range of 30 to 240 s, in particular at 90-120 C for 70-90 s.

16. The method (200) according to any one of claims 9-14, wherein the step of deactivating (250) is performed at a temperature within a range of 2 to 18°C, in particular a range of 4 to 8°C.
